# EUROPEAN PATENT SPECIFICATION

(11) **EP 2 005 815 B1**
(45) Date of publication and mention of the grant of the patent: **29.11.2017**
(21) Application number: 08010962.2
(22) Date of filing: 17.06.2008
(51) Int. Cl.: A01G 9/12

(54) **Improved tomato hook and device and method for manufacturing the latter**
Verbesserter Tomatenhaken sowie Vorrichtung und Verfahren zu seiner Herstellung
Crochet amélioré pour tomates et dispositif et procédé pour sa fabrication

(30) Priority: 22.06.2007 BE 200700315
(43) Date of publication of application: 24.12.2008
(73) Proprietor: Sebrechts, Jan, 2520 Broechem (Ranst) (BE); Sebrechts, Jozef, 2520 Broechem (Ranst) (BE)
(72) Inventor: Sebrechts, Jan, 2520 Broechem (Ranst) (BE); Sebrechts, Jozef, 2520 Broechem (Ranst) (BE)
(74) Representative: Donné, Eddy

(56) References cited:
- EP-A- 0 507 378
- FR-A- 2 680 446
- FR-A- 2 859 351
- NL-C1- 1 027 825

## Description

The present invention concerns an improved tomato hook and a device and method for manufacturing such an improved tomato hook.
It is known to guide tomato plants along a suspended string during their growth, whereby this string is extended as the plant grows, and the tomato hook is moved, such that the plant ends up horizontally and such that the plants can reach a large length, which corresponds to a large yield.
It is also known that use is made to this end of tomato hooks, as described for example in EP 0,507,378 of the same applicant, which tomato hooks are formed of a holder and a string attached to this holder, whereby the string is provided with two stocks, namely a first stock which is entirely wound around the holder and which is designed to be systematically unwound, and a second stock having a certain length, which second stock is at least partly wound alongside the above-mentioned holder, and thus can be entirely released at once from the holder, and whereby this second stock is being held together by auxiliary means provided to that end.
When the plant starts to grow, the holder is hooked above the plant concerned and on a string provided to that end at the top of the greenhouse.

Next, the above-mentioned auxiliary means which are formed of a rubber band or a clip, are removed from the second amount of string, such that this second amount of string is at once released from the holder, i.e. as a whole and without unwinding it.

The above-mentioned "certain length" is hereby such that it reaches almost up to the plant. During its growth, the plant is guided by means of the string. As the plant grows further, the holder is laterally moved by constantly putting it in another place, further away from the plant, whereby a number of windings are each time unwound from the first stock string of the holder.

Such tomato hooks according to EP 0,507,378 can be suspended in a quick and efficient manner in a greenhouse, without having to manually unwind the second amount of string.

However, a disadvantage of such known tomato hooks is that, in the case where the above-mentioned auxiliary means for holding the above-mentioned second amount of string together are made in the form of a clip, the tomato hook is relatively expensive and the application of said clip cannot or can hardly be automated.

Another disadvantage of such tomato hooks with a clip is that the tomato grower must always exert a relatively large force in order to remove said clip, which may be tiring, especially when a very large number of tomato hooks are to be suspended.

Another additional disadvantage of the known tomato hooks which make use of a clip, is that the clips are relatively sizeable, as a result of which they produce a relatively large amount of waste after use.

A disadvantage of tomato hooks whose above-mentioned auxiliary means are made in the form of a rubber band, is that such rubber bands are not or hardly biologically degradable and that some dexterity is required to detach said rubber band.
The present invention aims to remedy one or several of the above-mentioned and other disadvantages.
To this end, the present invention concerns an improved tomato hook according to claim 1.
An advantage of such an improved tomato hook according to the invention is that it can be manufactured in a very simple, fast and cheap manner and that the application of such a strip of material can be easily automated, for example in the manner described below.

Another advantage of such an improved tomato hook according to the invention is that the strips of material are relatively easily biologically degradable and only take up a limited volume, such that they do not produce a large amount of waste.

An additional advantage of an improved tomato hook according to the invention consists in that, in order to remove the strip of material so as to release the second stock of string, the user must not exert a large force, since such a strip of material can for example be easily torn off or pulled loose.

According to a preferred characteristic of an improved tomato hook according to the invention, the strip of material is fixed around the second stock by means of gluing, as this strip of material is glued with its respective far ends against one another, preferably by means of a detachable glue or in other words a glue with little adhesive power, for example what is called a microsphere-type adhesive.

This is advantageous in that the strip of material can be very easily and quickly detached.

The present invention also concerns a method for manufacturing such an improved tomato hook, whereby this method at least comprises the following steps: fixing a string to a holder; winding a first stock of string on a winding core of the holder; winding a second stock of string at least partly alongside the holder; and fixing a strip of material at least around the second stock.

The present invention also concerns a device for manufacturing an improved tomato hook as described above, whereby this device is provided with an application mechanism to apply a strip of material at least around the second stock of string.

Preferably, the above-mentioned application mechanism is provided with supply means to supply a strip of material which is provided with a layer of glue on at least one of its free ends; and with press-on means which press the respective far ends of the above-mentioned strip of material against each other so as to glue them together.

In order to better explain the characteristics of the present invention, the following preferred embodiments of an improved tomato hook according to the invention are described as an example only without being limitative in any way, as well as a method and device for manufacturing such an improved tomato hook, with reference to the accompanying drawings, in which:
figure 1 schematically represents an improved tomato hook according to the invention;
figures 2 to 4 represent a few successive steps of a method according to the invention for manufacturing an improved tomato hook according to the invention.

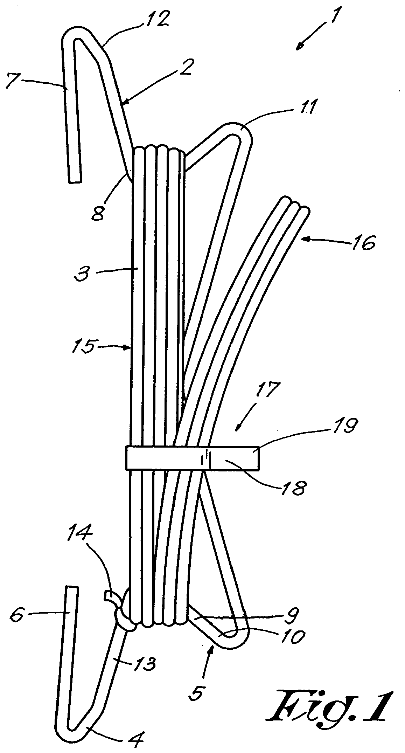

Figure 1 represents an improved tomato hook 1 according to the invention which is provided with a holder 2 and a string 3 attached to the holder 2.

In the embodiment of figure 1, the holder 2 is formed of a pleated steel wire 4 or the like. The holder 2 hereby has a winding core 5 and two hooks 6 and 7. The winding core 5 is formed of two countersunk parts 8 and 9 which are surrounded by standing edges 10-11 and 12-13.

The hooks 6 and 7 make it possible for the tomato hook 1 to be suspended on a string in a greenhouse.

The string 3 is fixed to the holder 2 by means of a knot 14 or the like and it is provided with two stocks of string, namely a first stock 15 designed to be systematically loosened by unwinding it, and a second stock 16 having a certain length, which second stock 16 can be released from the holder 2 at once - i.e. by means of a simple operation - as a whole and without unwinding it.

To this end, the first stock 15 is entirely wound round the holder 2, and in particular on the winding core 5, and due to the presence of the standing edges 10-13, it can only be released by systematically unwinding the string 3.

The second stock 16 of string 3 is at least partly wound alongside the above-mentioned holder 2, as the windings of this second stock 16 are situated entirely alongside the winding core 5 or as they are wound on it on only one side, as is represented in figure 1.

The above-mentioned second stock 16 hereby has a certain length - i.e. a pre-measured length - which is sufficient to almost entirely span the distance between a taught string onto which the improved tomato hook 1 is to be suspended at the top of a greenhouse on the one hand, and a plant which is to be attached to the string 3 on the other hand.

In order to prevent the second stock 16 from falling apart, auxiliary means 17 are provided to hold the string 3 of the second stock 16 together.

According to the invention, these auxiliary means 17 are made in the form of a strip of material 18 which is fixed at least around the second stock 16, and which, according to a preferred characteristic of the invention, also extends round the holder 2 and/or the first stock 15.

To this end, the strip of material 18 is glued with its respective far ends 19 and 20 against each other in this example, as this strip of material 18 is provided with a layer of glue on at least one or both of its free ends 19 and 20 with which said free ends 19 and 20 are glued together so as to be fixed around the second stock 16, and in this case also around the holder 2 and/or the first stock 15.

According to a preferred characteristic, the above-mentioned layer of glue is formed of a glue with little adhesive power, such as what is called a microsphere type adhesive, but this is not necessary according to the invention.
According to a preferred characteristic, the auxiliary means 17 is made of a material which can be easily and manually removed, such as for example by tearing it off or pulling it loose.

According to a preferred characteristic, the auxiliary means 17 is made of a material provided with microperforations or other weakenings, or the selected material has a reduced breakability and tensile strength. According to a preferred characteristic, the auxiliary means 17 or the holder are geometrically defined such that, after it has been applied and fixed round at least the holder 2 and the second stock of string 16, it cannot fall from the holder 2 due to the gravity, as the enclosed circumference of the auxiliary means 17 has smaller dimensions than the one formed by the winding core 5 and the standing edges 10-13 of the holder 2.
According to a preferred characteristic, the auxiliary means 17 is made of a material which is biologically degradable.
According to a preferred characteristic, the auxiliary means 17 is made of a material such as for example paper.

The use of an improved tomato hook 1 according to the invention is very simple and as follows.

The tomato hook 1 is hooked to a support in the greenhouse, such as a taught string, above the plants to be guided by means of the hook 6 or 7.
In order to make sure that the string 3 reaches up to the plant, one only has to remove the strip of material 18 from the second stock 16 of string 3, which has for a result that the second stock 16 is detached and falls apart on the bottom.

In the case where the second stock 16 is wound up entirely alongside the holder 2, the tomato hook 1 can be suspended to this end with any one of the hooks 6 or 7, but, in case the second stock 16 is wound with one side on the winding core, as is the case in the embodiment of figure 1, the tomato hook 1 must be suspended to the support in such a way that the side of the winding core 5 on which the second stock 16 is wound is directed downward, as is represented in figure 1.

Thus, in this example, the tomato hook 1 is suspended by means of the hook 7.

The above-described manner makes it possible to save a lot of time compared to the known tomato hooks whereby the amount of string between the holder and the bottom must be entirely unwound, as much less effort is required to remove the auxiliary means 17 than to manually unwind the second stock of string 16.

Moreover, the above-mentioned strip of material 18 can be very easily and quickly detached and requires only a minimum effort of the user.

Moreover, only a very limited volume of waste is produced which can be relatively easily biologically degraded.

As the plant grows, the holder 2 is systematically moved sideways along the support or string and the first stock 15 is systematically unwound as more string 3 is required to guide the plant.

According to a variant of an improved tomato hook 1 according to the invention which is not represented in the drawings, the above-mentioned glue can also be made in the form of glue having a large adhesive power and, if necessary, a weakening may be provided in the strip of material, for example in the shape of microperforations, recesses or the like.

In this way is still made sure that the strip of material 18 can be removed in a very simple and fast manner from the second stock string 16 in order to suddenly release it.

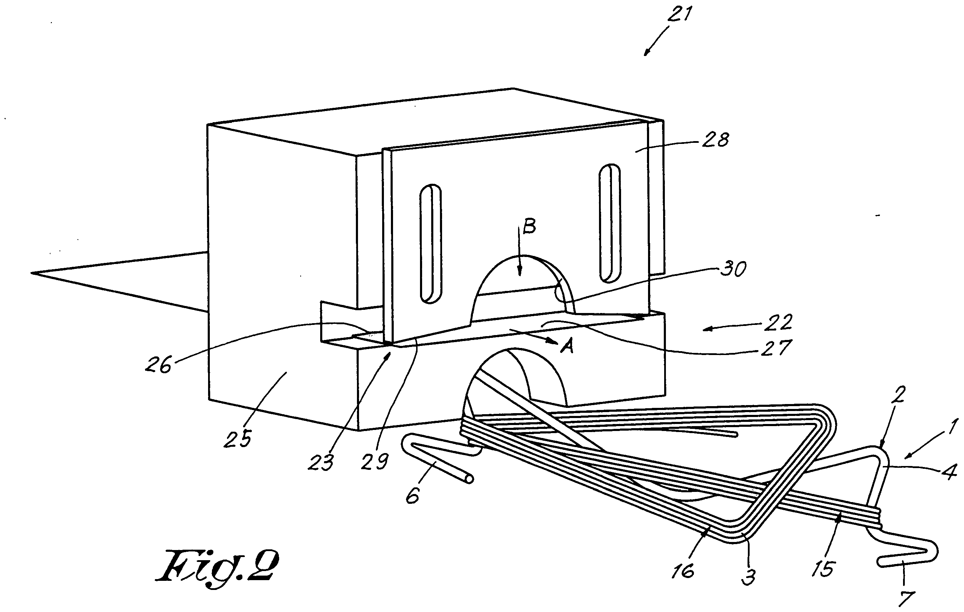

Figure 2 represents a part 21 of a device according to the invention for manufacturing an improved tomato hook 1 as described above.

This device is in this case provided with a winding mechanism and a supporting mechanism for fixing the holder, not represented in the drawing, for example made as described in EP 0,507,378.

Moreover, the device 21 preferably has means which can be switched between at least two positions, which make it possible, via said switching, to form the above-mentioned two stocks of string 15 and 16 at or on the holder 2.

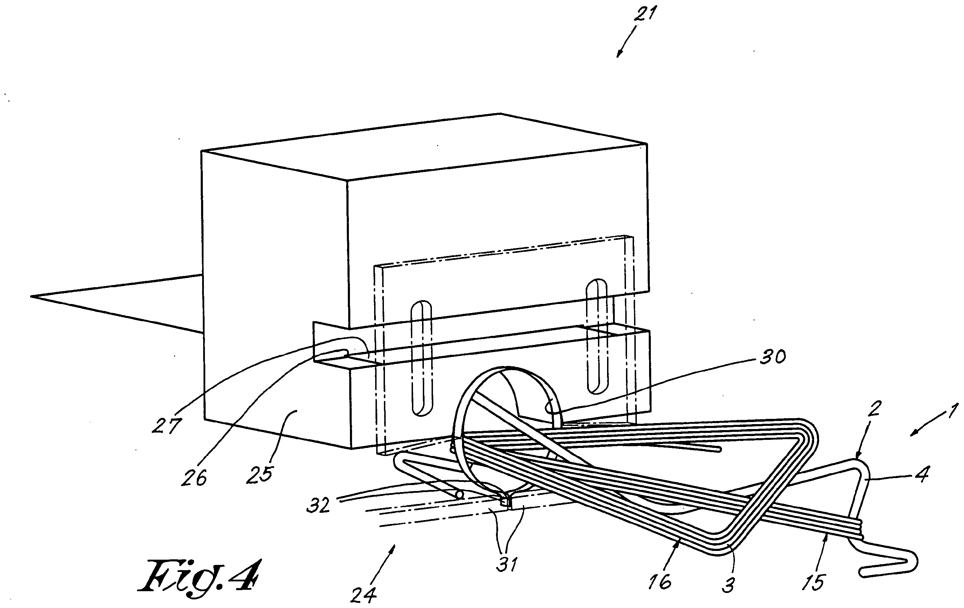

According to the invention, the device is at least provided with an application mechanism 22 to fix a strip of material 18 round at least one stock, in particular the second stock 16, whereby this application mechanism 22 is in this case provided with supply means 23 to supply a strip of material 18 which is provided with a layer of glue on at least one of its free ends; and with press-on means 24 represented by means of a dashed line in figure 4 and which can press the respective far ends 19 and 20 of the above-mentioned strip of material 19 against one another, in order to glue them together.

The above-mentioned supply means 23 are in this case provided with a housing 25 in which is provided a groove 26 through which a sheet of material 27 is supplied according to a feed direction A, whereby this sheet of material 27 is provided on at least one edge in this case with an almost continuous layer of glue, which is not visible in the drawings.

Further, the supply means 23 in the present example are provided with a knife 28, provided with its cutting edge 29 opposite the above-mentioned groove 26 and which can move in a cutting direction B, crosswise to the supply direction A, in particular in the direction of the above-mentioned sheet of material 27.

According to a special, preferred characteristic of the invention, the above-mentioned knife 28 is provided with a recess 30 on its cutting edge, which recess 30 preferably consists of an arched notch in the cutting edge of the knife 28.

The use and working of a device 21 is very simple and as follows.

First, the holder 2 is fixed in the above-mentioned supporting device. Next, the string 3 is fixed to the holder 2 by means of a knot 14. Then, in the known manner, a first stock 15 of the string 3 is wound on the winding core 5.

As soon as a number of windings are available on the winding core 5, the above-mentioned switchable means are switched, which has for a result that a second stock 16 of string 3 will be wound then, at least partly alongside the holder 2.

As soon as both stocks 15 and 16 have been formed, the string 3 is cut and the second stock 16 is fixed, for example in the way as is represented step by step in figures 2 to 4.

Hereby, in a first step as represented in figure 2, the tomato hook 1 is provided opposite the above-mentioned groove 26, and in particular on the other side of this groove 26 than the above-mentioned knife 28.

Through the groove 26 is fed a sheet of material 27 which, in this case but not necessarily, on the side directed towards the tomato hook 1 and at least on one side edge, is provided with a layer of glue, preferably consisting of a glue with little adhesive power.

According to a variant of the method according to the invention, it is also possible to provide the layer of glue on the sheet of material 27 in the supply means 23, for example while the sheet of material 27 is being fed through the groove 26.

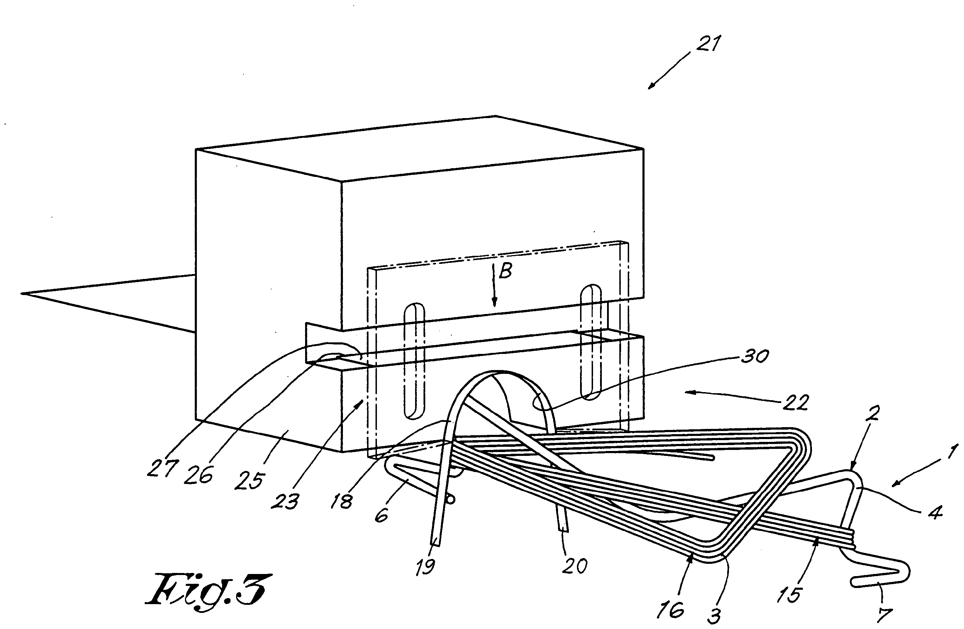

In a second step, which is represented in figure 3, the knife 28 is moved in the cutting direction B, towards the above-mentioned sheet of material 27, and said knife 28 will cut off a narrow strip of material 18 from said sheet of material 27.

Thanks to the presence of the above-mentioned recess 30, the respective far ends 19 and 20 of the strip of material 18 will be pushed down, such that these far ends extend on either side of the tomato hook 1.

Next, as represented in figure 4, the above-mentioned press-on means 24 are activated, which in this case consist of two arms 31 which are each provided with a pressure area 32 and which are provided under the above-mentioned knife 28 such that they can move in relation to one another, such that, in a first position, they are situated with their respective pressure areas 32 at a distance from one another and, in a second position, they are pressed with their pressure areas 32 against one another.

While the press-on means 24 are activated, the arms 31 are moved from their first into their second position, such that the free ends of the strip of material 18 are pressed against one another and, thanks to the presence of the above-mentioned layer of glue on at least one of these far ends 19 and/or 20, are glued against one another.

In the given example, the strip of material 18 is glued entirely round the tomato hook 1, in particular round the holder 2, the first stock 15 and the second stock 16, but it is also possible according to the invention for the strip of material 18 to be provided only round the second stock 16, or only round the second stock 16 and the holder 2, or only round the second stock 16 and the first stock 15.

The recess 30 in the cutting edge of the knife 28 is in this case made in the shape of an arched notch, but according to the invention, the above-mentioned recess 30 may also have other shapes, such as a U- or V-shaped notch or the like.

In the above-described embodiment of an improved tomato hook according to the invention, the strip of material 18 is always fixed round at least the second stock 16 of the string 3 by means of gluing, but it is not excluded according to the invention to apply other fixing means, such as stapling the far ends 19 and 20 of the strip of material 18 together, or punching them together or fixing them together by means of any other fixing technique whatsoever.

The present invention is by no means restricted to the embodiments and methods given as an example and represented in the accompanying drawings; on the contrary, such an improved tomato hook and a device and method for manufacturing it can be made in all sorts of ways and according to many variants while still remaining within the scope of the invention.

## Claims

1. Improved tomato hook which is provided with a holder (2) and a string (3) attached to this holder (2), whereby the string (3) is provided with two stocks, namely a first stock (15) which is entirely wound around the holder (2) and a second stock (16) having a certain length, which second stock (16) is wound at least partly alongside the above-mentioned holder (2) and can be entirely released from the holder (2) all at once, and whereby this second stock (16) is being held together by an auxiliary means (17) provided to that end, which auxiliary means (17) is made in the form of a strip of material (18) which is fixed at least round the second stock (16), **characterised in that** said auxiliary means (17) is provided with microperforations or other weakenings or a weak gluing or is made of a material with a weak tensile strength, such that these auxiliary means can be easily and manually removed by tearing it off or pulling it loose with a minimum effort of the user.

2. Improved tomato hook (1) according to claim 1, **characterised in that** the respective far ends (19 and 20) of the auxiliary means (17) are glued together.

3. Improved tomato hook (1) according to any one of the preceding claims, **characterised in that** the holder (2) or the auxiliary means (17) are geometrically defined such that the provided auxiliary means (17) cannot fall off after it has been applied.

4. Improved tomato hook (1) according to any one of the preceding claims, **characterised in that** the auxiliary means (17) extends at least round the holder (2) and a stock of string (15 and/or 16).

5. Improved tomato hook (1) according to any one of the preceding claims, **characterised in that** the holder (2) is provided with a winding core (5) for the first stock (15) and that the enclosed circumference of the auxiliary means (17) has smaller dimensions than the one formed by the winding core (5).

6. Improved tomato hook (1) according to any one of the preceding claims, **characterised in that** the auxiliary means (17) is biologically degradable.

7. Improved tomato hook (1) according to any one of the preceding claims, **characterised in that** the auxiliary means (17) is made of a material like paper.

8. Device for manufacturing an improved tomato hook (1) according to any one of the preceding claims, which tomato hook (1) is provided with a holder (2) and with a string (3) attached to the holder (2), and whereby it is provided with two stocks of string, namely a first stock (15) which is entirely wound around the holder (2), and a second stock (16) which is wound at least partly alongside the above-mentioned holder (2), **characterised in that** said device is provided with an application mechanism (22) to apply and fix an auxiliary means (17) at least round the second stock (16) .

9. Device according to claim 8, **characterised in that** the above-mentioned application mechanism (22) is provided with supply means (23) for feeding a strip of material (18) which is provided with a layer of glue on at least one of its free ends (19 and/or 20); and with press-on means (24) which can press the respective far ends (19 and 20) of the above-mentioned strip of paper (18) together so as to glue them together.

10. Device according to claims 8 and 9, **characterised in that** the above-mentioned supply means (23) are provided with a housing (25) with a groove (26) in it through which a sheet of material (27) is supplied according to a feed direction (A), whereby it is provided with an almost continuous layer of glue on at least one edge, and whereby the supply means (23) further comprise a knife (28) which can move in a cutting direction (B), crosswise to the feed direction (A), and whereby it is provided with a recess (30) on its cutting edge.

11. Device according to claim 8, 9 and 10, **characterised in that** the above-mentioned recess (30) is arched.

12. Method for manufacturing an improved tomato hook according to any of the claims 1 to 7, **characterised in that** this method at least comprises the following steps:
- fastening a string (3) to a holder (2);
- winding a first stock (15) of string (3) on a winding core (5) of the holder (2);
- winding a second stock (16) of string (3) at least partly alongside the holder (2); and
- fixing a strip of material (18) at least round the second stock (16) of string;
- feeding a sheet of material (27) and cutting a strip of material (18) from this sheet of material before fixing this strip of material (18) round at least the second stock (16) of string;
- fixing the strip of material (18) round at least the second stock (16) of string by gluing together the far ends (19 and 20).

## Patentansprüche

1. Verbesserter Tomatenhaken, der mit einer Halterung (2) und einer an dieser Halterung (2) befestigten Schnur (3) versehen ist, wobei die Schnur (3) mit zwei Vorräten versehen ist, nämlich einem ersten Vorrat (15), der vollständig um die Halterung (2) herumgewickelt ist, und einem zweiten Vorrat (16) mit einer bestimmten Länge, welcher zweite Vorrat (16) mindestens teilweise neben der vorgenannten Halterung (2) aufgewickelt ist und in einem Mal vollständig von der Halterung (2) freigemacht werden kann, und wobei dieser zweite Vorrat (16) durch ein zu diesem Zweck vorgesehenes Hilfsmittel (17) zusammengehalten wird, welches Hilfsmittel (17) in Form eines Materialstreifens (18) ausgeführt ist, der mindestens um den zweiten Vorrat (16) herum angebracht ist, **dadurch gekennzeichnet, dass** besagtes Hilfsmittel (17) mit Mikroperforationen oder anderen Schwächungen oder einer schwachen Verklebung versehen ist oder aus einem Material mit geringer Zugstärke besteht, sodass dieses Hilfsmittel leicht und manuell entfernt werden kann, indem es mit einer minimalen Anstrengung des Benutzers abgerissen wird oder losegezogen wird.

2. Verbesserter Tomatenhaken (1) nach Anspruch 1, **dadurch gekennzeichnet, dass** die betreffenden Enden (19 und 20) des Hilfsmittels (17) aneinandergeklebt sind.

3. Verbesserter Tomatenhaken (1) nach einem der vorhergehenden Ansprüche, **dadurch gekennzeichnet, dass** die Halterung (2) oder das Hilfsmittel (17) geometrisch definiert sind, sodass das angebrachte Hilfsmittel (17) nicht herunterfallen kann, nachdem es angebracht wurde.

4. Verbesserter Tomatenhaken (1) nach einem der vorhergehenden Ansprüche, **dadurch gekennzeichnet, dass** das Hilfsmittel (17) sich mindestens um die Halterung (2) und einen Vorrat von Schnur (15 und/oder 16) herum erstreckt.

5. Verbesserter Tomatenhaken (1) nach einem der vorhergehenden Ansprüche, **dadurch gekennzeichnet, dass** die Halterung (2) mit einem Wickelkern (5) für den ersten Vorrat (15) versehen ist und dass der eingeschlossene Umfang des Hilfsmittels (17) kleinere Abmessungen aufweist als der durch den Wickelkern (5) gebildete.

6. Verbesserter Tomatenhaken (1) nach einem der vorhergehenden Ansprüche, **dadurch gekennzeichnet, dass** das Hilfsmittel (17) biologisch abbaubar ist.

7. Verbesserter Tomatenhaken (1) nach einem der vorhergehenden Ansprüche, **dadurch gekennzeichnet, dass** das Hilfsmittel (17) aus einem Material wie etwa Papier besteht.

8. Vorrichtung zur Herstellung eines verbesserten Tomatenhakens (1) nach einem der vorhergehenden Ansprüche, welcher Tomatenhaken mit einer Halterung (2) und einer an der Halterung (2) befestigten Schnur (3) versehen ist, und wobei er mit zwei Vorräten von Schnur versehen ist, nämlich einem ersten Vorrat (15), der vollständig um die Halterung (2) herumgewickelt ist, und einem zweiten Vorrat (16), der mindestens teilweise neben der vorgenannten Halterung (2) aufgewickelt ist, **dadurch gekennzeichnet, dass** besagte Vorrichtung mit einem Anbringmechanismus (22) zum mindestens um den zweiten Vorrat (16) herum Anbringen und Befestigen eines Hilfsmittels (17) versehen ist.

9. Vorrichtung nach Anspruch 8, **dadurch gekennzeichnet, dass** der vorgenannte Anbringmechanismus (22) mit Zuführmitteln (23) zum Zuführen eines an mindestens einem seiner freien Enden (19 und/oder 20) mit einer Klebstoffschicht versehenen Materialstreifens (18) ausgestattet ist; und mit Andrückmitteln (24), welche die betreffenden Enden (19 und 20) des vorgenannten Papierstreifens (18) gegeneinander drücken können, um sie zusammenzukleben.

10. Vorrichtung nach Ansprüchen 8 und 9, **dadurch gekennzeichnet, dass** die vorgenannten Zuführmittel (23) mit einem Gehäuse (25) mit darin einem Schlitz (26), durch den ein Materialbogen (27) gemäß einer Zufuhrrichtung (A) zugeführt wird, versehen ist, wobei besagter Materialbogen an mindestens einem Rand mit einer nahezu kontinuierlichen Klebstoffschicht versehen ist, und wobei die Zuführmittel (23) weiter ein Messer (28) umfassen, das sich in einer Schneidrichtung (B), quer zu der Zufuhrrichtung (A), bewegen kann, und wobei es an seiner Schneidkante mit einer Aussparung (30) versehen ist.

11. Vorrichtung nach Ansprüchen 8, 9 und 10, **dadurch gekennzeichnet, dass** die vorgenannte Aussparung (30) bogenförmig ist.

12. Verfahren zur Herstellung eines verbesserten Tomatenhakens nach einem der Ansprüche 1 bis 7, **dadurch gekennzeichnet, dass** dieses Verfahren mindestens die folgenden Schritte umfasst:
- Befestigen einer Schnur (3) an einer Halterung (2);
- Wickeln eines ersten Vorrats (15) von Schnur (3) auf einen Wickelkern (5) der Halterung (2);
- Aufwickeln eines zweiten Vorrats (16) von Schnur (3) mindestens teilweise neben der Halterung (2); und
- Befestigen eines Materialstreifens (18) mindestens um den zweiten Vorrat (16) von Schnur;
- Zuführen eines Materialbogens (27) und Abschneiden eines Materialstreifens (18) von diesem Materialbogen vor dem Befestigen dieses Materialstreifens (18) um mindestens den zweiten Vorrat (16) von Schnur herum;
- Befestigen des Materialstreifens (18) um mindestens den zweiten Vorrat (16) von Schnur durch Zusammenkleben der Enden (19 und 20).

## Revendications

1. Crochet perfectionné pour tomates qui est équipé d'un dispositif de maintien (2) et d'un cordon (3) fixé à ce dispositif de maintien (2), dans lequel le cordon (3) est fourni avec deux stocks, plus précisément un premier stock (15) qui est entièrement enroulé autour du dispositif de maintien (2) et un second stock (16) possédant une certaine longueur, ledit second stock (16) étant enroulé au moins en partie le long du dispositif de maintien susmentionné (2) et pouvant être dégagé entièrement du dispositif de maintien (2) en une fois, et dans lequel ce second stock (16) est maintenu ensemble par un moyen auxiliaire (17) prévu à cet effet, ledit moyen auxiliaire (17) étant réalisé sous la forme d'une bande de matière (18) qui est fixée au moins autour du second stock (16), **caractérisé en ce que** ledit moyen auxiliaire (17) est muni de microperforations ou d'autres affaiblissements ou d'un léger collage ou bien est réalisé à partir d'un matériau possédant une faible résistance à la traction, d'une manière telle que ces moyens auxiliaires peuvent être dégagés sans difficulté et à la main par déchirement ou en les libérant par traction avec un minimum d'effort de la part de l'utilisateur.

2. Crochet perfectionné pour tomates (1) selon la revendication 1, **caractérisé en ce que** les extrémités éloignées respectives (19 et 20) du moyen auxiliaire (17) sont collées l'une à l'autre.

3. Crochet perfectionné pour tomates (1) selon l'une quelconque des revendications précédentes, **caractérisé en ce que** le dispositif de maintien (2) ou les moyens auxiliaires (17) sont définis du point de vue géométrique d'une manière telle que les moyens auxiliaires prévus (17) ne peuvent pas s'échapper en tombant, une fois qu'ils ont été appliqués.

4. Crochet perfectionné pour tomates (1) selon l'une quelconque des revendications précédentes, **caractérisé en ce que** le moyen auxiliaire (17) s'étend au moins autour du dispositif de maintien (2) et d'un stock de cordon (15 et/ou 16).

5. Crochet perfectionné pour tomates (1) selon l'une quelconque des revendications précédentes, **caractérisé en ce que** le dispositif de maintien (2) est muni d'un axe d'enroulement (5) pour le premier stock (15) et **en ce que** la circonférence fermée du moyen auxiliaire (17) possède des dimensions inférieures à celle formées par l'axe d'enroulement (5).

6. Crochet perfectionné pour tomates (1) selon l'une quelconque des revendications précédentes, **caractérisé en ce que** le moyen auxiliaire (17) est biodégradable.

7. Crochet perfectionné pour tomates (1) selon l'une quelconque des revendications précédentes, **caractérisé en ce que** le moyen auxiliaire (17) est réalisé à partir d'une matière analogue à du papier.

8. Dispositif pour la fabrication d'un crochet perfectionné pour tomates (1) selon l'une quelconque des revendications précédentes, ledit crochet pour tomates (1) étant équipé d'un dispositif de maintien (2) et d'un cordon (3) fixé au dispositif de maintien (2), et dans lequel il est fourni avec deux stocks de cordon, plus précisément un premier stock (15) qui est entièrement enroulé autour du dispositif de maintien (2) et un second stock (16) qui est enroulé au moins en partie le long du dispositif de maintien susmentionné (2), **caractérisé en ce que** ledit dispositif est muni d'un mécanisme d'application (22) pour appliquer et fixer un moyen auxiliaire (17) au moins autour du second stock (16).

9. Dispositif selon la revendication 8, **caractérisé en ce que** le mécanisme d'application susmentionné (22) est équipé d'un moyen d'alimentation (23) pour l'alimentation d'une bande de matière (18) qui est munie d'une couche de colle sur au moins une de ses extrémités libres (19 et/ou 20), et d'un moyen d'enfoncement (24) qui peut comprimer les extrémités éloignées respectives (19 et 20) de la bande de papier susmentionnée (18) l'une contre l'autre, de manière à les coller l'une à l'autre.

10. Dispositif selon les revendications 8 et 9, **caractérisé en ce que** les moyens d'alimentation susmentionnés (23) sont munis d'un logement (25) dans lequel est pratiquée une rainure (26) à travers laquelle est acheminée une feuille de matière (27) en suivant une direction d'alimentation (A), dans lequel elle est munie d'une couche pratiquement continue de colle sur au moins un bord, et dans lequel le moyen d'alimentation (23) comprend en outre une lame (28) qui peut se déplacer dans une direction de coupe (B) transversalement par rapport à la direction d'alimentation (A), et dans lequel elle est munie d'un évidement (30) sur son bord tranchant.

11. Dispositif selon les revendications 8, 9 et 10, **caractérisé en ce que** l'évidement susmentionné (30) est arqué.

12. Procédé pour la fabrication d'un crochet perfectionné pour tomates selon l'une quelconque des revendications 1 à 7, **caractérisé en ce que** ledit procédé comprend au moins les étapes suivantes dans lesquelles :
- on fixe un cordon (3) à un dispositif de maintien (2) ;
- on enroule un premier stock (15) de cordon (3) sur un axe d'enroulement (5) du dispositif de maintien (2) ;
- on enroule un second stock (16) de cordon (3) au moins en partie le long du dispositif de maintien (2) ; et
- on fixe une bande de matière (18) au moins autour du second stock (16) de cordon ;
- on alimente une feuille de matière (27) et on coupe une bande de matière (18) à partir de cette feuille de matière avant de fixer cette bande de matière (18) autour d'au moins le second stock (16) de cordon ;
- on fixe la bande de matière (18) autour d'au moins le second stock (16) de cordon en collant l'une sur l'autre les extrémités éloignées (19 et 20).
